# EUROPÄISCHE PATENTSCHRIFT

(11) **EP 2 795 633 B1**
(45) Veröffentlichungstag und Bekanntmachung des Hinweises auf die Patenterteilung: **21.10.2015**
(21) Anmeldenummer: 12801470.1
(22) Anmeldetag: 14.11.2012
(51) Int. Cl.: H01F 5/02

(54) **SPULENTRÄGER SOWIE ELEKTROMAGNETISCHE STELLVORRICHTUNG MIT SPULENTRÄGER**
COIL CARRIER AND ELECTROMAGNETIC ACTUATOR HAVING A COIL CARRIER
SUPPORT DE BOBINE AINSI QUE DISPOSITIF DE RÉGLAGE ÉLECTROMAGNÉTIQUE

(30) Priorität: 22.12.2011 DE 102011056853
(43) Veröffentlichungstag der Anmeldung: 29.10.2014
(73) Patentinhaber: Eto Magnetic GmbH, 78333 Stockach (DE)
(72) Erfinder: GRÜNER, Maria, 88696 Owingen-Billafingen (DE); FEINDLER, Michael, 78333 Stockach (DE); VINCON, Peter, 78333 Stockach (DE)
(74) Vertreter: Wagner, Kilian
(86) Internationale Anmeldenummer: PCT/EP2012/072596
(87) Internationale Veröffentlichungsnummer: WO 2013/092012

(56) Entgegenhaltungen:
- DE-U1- 9 300 039
- US-A- 4 153 890
- US-A- 4 443 775
- US-A1- 2003 006 872

## Beschreibung

Die Erfindung betrifft einen Spulenträger gemäß dem Oberbegriff des Anspruchs 1 für eine elektromagnetische Stellvorrichtung, mit einem Wickelabschnitt zur Aufnahme einer bestrombaren Wicklung, mit einem spritzgegossenen Kunststoffkörper mit einer auf einer ersten Axialseite des Wickelabschnittes festgelegten, als Ringscheibe ausgebildeten ersten Jochscheibe und mit einem von dem Kunststoffkörper umschlossenen Ankerführungsraum zur Aufnahme eines axial verstellbaren Ankers. Ferner betrifft die Erfindung eine elektromagnetische Stellvorrichtung gemäß Anspruch 13 mit einem solchen Spulenträger.

Es sind Spulenträger mit einem Kunststoffkörper bekannt, in welchem ein metallisches Ankerführungsrohr zur Führung des Ankers bei seiner Axialverstellung aufgenommen ist. Bei derartigen elektromagnetischen Stellvorrichtungen wird eine erste Jochscheibe auf einer Planseite aufgesetzt und bei der Gehäusemontage fixiert. Problematisch hierbei sind Montagetoleranzen. In der Praxis ist es nur schwer möglich das metallische Ankerführungsrohr mit ausreichend geringem Achsversatz über die Toleranzbreite aller Bauteile einzubauen, wodurch sowohl mechanische als auch magnetische Störkräfte in radialer Richtung entstehen können, durch die sich in der Lagerstelle eine erhöhte Reibung ergibt, die zu einem vorzeitigen Verschleiß führen kann. Zudem ergibt sich ein vergleichsweise großer radialer Abstand der angrenzenden magnetisch funktionalen Bauteile zum Anker, wobei dieser Abstand der Magnetkraft und folglich der Systemleistung bzw. dem Wirkungsgrad abträglich ist.

Bei geometrisch vergleichsweise großbauenden elektromagnetischen Stellvorrichtungen werden Spulenträger eingesetzt, bei denen der Anker nicht in einem Ankerführungsrohr sondern unmittelbar an in Umfangsrichtung nebeneinander angeordneten und sich in Axialrichtung erstreckenden Kunststofferhöhungen geführt ist. Bei derartigen elektromagnetischen Stellvorrichtungen erfolgt die Montage der ersten Jochscheibe durch Aufstecken auf mehrere in Umfangsrichtung voneinander beabstandete Axialfortsätze des Kunststoffkörpers, die durch entsprechende, in Umfangsrichtung voneinander beabstandete Durchgangsausnehmungen in der ersten Jochscheibe geführt werden. Die Fixierung der Jochscheibe erfolgt bei der Gehäusemontage. Vorstehende Technologie hat sich für die vorerwähnten, vergleichsweise großen Stellvorrichtungen mit großvolumigen Spulenträgern bewährt, bei denen die Axialfortsätze eine ausreichend große Materialstärke aufweisen. Problematisch ist der Einsatz dieser Technologie bei filigraneren elektromagnetischen Stellvorrichtungen, bei denen mit vergleichsweise kleinen Spulenträgern gearbeitet wird, die es nicht zulassen, ausreichend materialstarke Axialfortsätze zum Aufsetzen der ersten Jochscheibe bereitzustellen. Hier kann es zu vielfältigen Montagestörungen und einer hohen Ausschussrate kommen, da die Axialfortsätze beim Aufstecken der Jochscheibe brechen können. Zudem ist auch bei vorstehender Technologie der Radialabstand zwischen Jochscheibe und Anker teilweise noch zu groß und zu toleranzbehaftet, was sich negativ auf den Wirkungsgrad auswirkt, was bei kleinbauenden magnetischen Stellvorrichtungen insbesondere problematisch ist, da nicht beliebig große Spulenwicklungen eingesetzt werden können.

Häufig kommt es bei den bekannten Spulenträgern auch zu einem axialen Aufbiegen von den Wickelabschnitt axial begrenzenden Kunststoffwänden, da das Wickeln im Stand der Technik vor der Montage der Jochscheibe erfolgt und die den Wickelabschnitt axial begrenzenden Kunststoffwände eine geringe Stabilität aufweisen.

Aus der nachveröffentlichten DE 10 2010 055 035 A1 ist ein Elektromagnetventil bekannt, bei dem ausschließlich eine Jochscheibe durch Umspritzen an dem einen Ankerführungsraum ausbildenden Kunststoffkörper festgelegt ist.

Die DE 10 2010 009 400 A1 zeigt ein elektromagnetisches Hydraulikventil bei welchem eine mehrteilige Jochscheibe vorgesehen ist, die nach dem Spritzgussvorgang zur Herstellung eines Kunststoffkörpers in entsprechende Kunststoffkörperausnehmungen eingeschoben wird.

Aus der DE 93 00 039 U1 ist eine elektromagnetische Stellvorrichtung bekannt, bei welcher eine Jochscheibe durch axiales Klemmen fixiert ist.

Aus der DE 694 17 630 T2 ist ein elektromagnetisches Ventil bekannt, welches eines rohrförmigen metallischen Kern aufweist.

Ausgehend von dem vorgenannten Stand der Technik liegt der Erfindung die Aufgabe zugrunde, einen alternativen Spulenträger anzugeben, der zum einen eine leichte Montage der elektromagnetischen Stellvorrichtung gewährleistet und der sich zudem durch minimale Toleranzen und Abstände zwischen magnetkreisrelevanten Bauteilen und Anker auszeichnet. Zudem soll der Spulenträger besonders robust sein und sich für den Einsatz bei geometrisch kleinbauenden Stellvorrichtungen eignen.

Ferner besteht die Aufgabe darin eine, insbesondere kleinbauende, elektromagnetische Stellvorrichtung mit einem entsprechend verbesserten Spulenträger anzugeben.

Diese Aufgabe wird hinsichtlich des Spulenträgers mit den Merkmalen des Anspruchs 1 und hinsichtlich der elektromagnetischen Stellvorrichtung mit den Merkmalen des Anspruchs 13 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Der Erfindung liegt der Gedanke zugrunde, das mechanische Aufsetzen der ersten Jochscheibe auf Axialfortsätze zu ersetzen durch ein Umspritzen der Jochscheibe, also ein Fixieren der Jochscheibe bereits im Stadium der Herstellung des Kunststoffkörpers, wobei die ringförmige, d.h. eine zentrische Durchgangsöffnung aufweisende erste Jochscheibe so beschaffen ist, dass diese mindestens eine nach radial innen offene Aussparung aufweist, die beim Kunststoffspritzvorgang mit Kunststoffkörpermaterial gefüllt wird, und zwar derart, dass das Kunststoffkörpermaterial nach radial innen in die zentrische Durchgangsöffnung der Jochscheibe vorsteht und somit eine Führung für den Anker bei seiner Axialverstellung bildet. Anders ausgedrückt werden Führungsflächen zur Führung des Ankers von Kunststoffkörpermaterial gebildet bzw. bereitgestellt, welches nach radial innen über mindestens eine, vorzugsweise mehrere in Umfangsrichtung beabstandete radial innen offene Aussparungen in der magnetisch leitenden Jochscheibe vorsteht. Bei dem erfindungsgemäßen Spulenträger entfällt das separate Montieren der ersten Jochscheibe am fertigen Kunststoffträger, da die erste, bevorzugt einteilige, Jochscheibe bei der Herstellung des Kunststoffkörpers an diesem formschlüssig festgelegt wird. Darüber hinaus kann sehr exakt über die Einstellung des radial inneren Überstandes des Kunststoffkörpermaterials über die Jochscheibe der Radialabstand der Jochscheibe zum Anker bemessen bzw. eingestellt und im Hinblick auf einen guten Wirkungsgrad optimiert werden. Durch die Integration der Jochscheibe in den Kunststoffkörper durch Umspritzen wird dieses Bauteil stabiler, insbesondere für einen nachgelagerten Wickelprozess - Aufbiegeerscheinungen, wie diese im Stand der Technik auftreten werden sicher vermieden. Darüber hinaus besteht bei der Montage keine Gefahr der Beschädigung von Bauteilen, auch nicht bei kleinvolumigen Spulenträgern, wodurch sich der erfindungsgemäße Spulenträger insbesondere (jedoch nicht ausschließlich) für den Einsatz bei kleinbauenenden elektromagnetischen Stellvorrichtungen eignet. Insbesondere dann, wenn der Anker nicht nur im Bereich radial innerhalb der Jochscheibe unmittelbar an Kunststoffkörpermaterial geführt wird, sondern auch in einem axial benachbarten Bereich innerhalb des Ankerführungsraums ergeben sich weitere Vorteile. So erübrigt sich der Bauraum und das vorgehaltene Montagespiel für ein zusätzliches, im Stand der Technik als Ankerführungsrohr ausgebildetes Lagerelement, wodurch der parasitäre Luftspalt im Bereich des Ankers insgesamt kleiner ausgeführt werden kann. Außerdem ist ein ausreichend geringer Achsversatz über die Toleranzbreite aller Bauteile möglich, was wiederum zu geringeren mechanischen als auch magnetischen Störkräften in radialer Richtung führt. Ein weiterer wesentlicher Vorteil des erfindungsgemäßen Spulenträgers besteht zudem in der Reduzierung der Anzahl der Einzelteile; so wird wie erwähnt, keine Ankerführungshülse benötigt und die, vorzugsweise metallische, erste Jochscheibe bildet nicht mehr wie im Stand der Technik ein Einzelteil. Die Montage ist wesentlich vereinfacht, da auf einen störanfälligen Aufsteckvorgang und einen danach folgenden zusätzlichen Fixiervorgang im Rahmen der Montage des Gehäuses verzichtet werden kann.

Erfindungsgemäß ist weiter vorgesehen, dass zusätzlich zu der ersten Jochscheibe eine der ersten Jochscheibe im Hinblick auf den dazwischen befindlichen Wickelabschnitt gegenüberliegende, bevorzugt einteilige, zweite Jochscheibe vorgesehen ist, die ebenfalls durch Umspritzen am Kunststoffkörper festgelegt ist, so dass eine separate Montage vermieden wird. Bevorzugt kontaktiert die zweite Jochscheibe einen bzw. liegt an an einem ebenfalls im Kunststoffkörper vorgesehenen, umspritzten, magnetisch leitenden Kern, welcher den Ankerführungsraum in axialer Richtung begrenzt, wobei es noch weiter bevorzugt ist, wenn der Kern einen axialen Durchgangskanal zur Aufnahme eines mittels des Ankers verstellbaren Stößel aufweist, welcher wiederum bevorzugt mit einem Stellpartner, insbesondere einem Ventilkörper, vorzugsweise einer Kugel, insbesondere eines Ölventils zusammenwirkt.

Der erfindungsgemäße Spulenträger zeichnet sich also durch eine erste und eine zweite Jochscheibe aus, die beide bei der Herstellung des Kunststoffkörpers im Spritzgussverfahren mit dem den Kunststoffkörper bildenden Kunststoffmaterial an diesem durch Umspritzen festgelegt worden sind. Das Vorsehen der zweiten, erfindungsgemäß wie die erste ebenfalls durch Umspritzen an dem Kunststoffkörper festgelegte Jochscheibe wird der Spulenträger weiter stabilisiert und Aufbiegeerscheinungen beim nachgelagerten Wickelprozess werden sicher vermieden.

Wie eingangs bereits erwähnt ist es besonders bevorzugt, wenn in der Jochscheibe mehrere, insbesondere gleichmäßig, in Umfangsrichtung beabstandete, jeweils nach radial innen offene Aussparungen vorgesehen sind, die durch Umspritzen mit Kunststoffkörpermaterial derart gefüllt sind, dass das Kunststoffkörpermaterial nach radial innen über die Aussparung bzw. die erste Jochscheibe hineinragt, um eine Führung für den Anker auszubilden. Dabei ist es besonders zweckmäßig, wenn sich diese Führung in axialer Richtung über die Axialerstreckung der ersten Jochscheibe hinaus in den Ankerführungsraum, vorzugsweise über dessen gesamte Axialerstreckung fortsetzt. Auf diese Weise wird eine segmentierte, wenig toleranzbehaftete Kunststoffführung für den Anker bereitgestellt. Dabei ist es besonders zweckmäßig, wenn die von dem vorstehenden Kunststoffkörpermaterial gebildete Führungsfläche an die Mantelflächenform des Ankers angepasst ist. Bevorzugt erfolgt die Anpassung auf einen zylindrischen Anker, so dass die Führungsflächen konkav gewölbt sind.

Idealerweise ist zu beiden Axialseiten der Jochscheibe ein Kunststoffwandabschnitt des Kunststoffkörpers vorgesehen, so dass die erste Jochscheibe in einer Art Umfangsnut aufgenommen ist, wobei die Nutwände (Wandabschnitte) den Innenumfang der von der ersten Jochscheibe begrenzten zentrischen Durchgangsöffnung nach radial außen überragen, um die erste Jochscheibe so in axialer Richtung zu sichern. Anders ausgedrückt ist rechts und links der Jochscheibe jeweils ein Stützabschnitt (Wandabschnitt, Nutwandabschnitt) des Spulenkörpers ausgebildet, die die Jochscheibe spielfrei zwischen sich aufnehmen, wobei die Stützabschnitte in axialer Richtung über das in der mindestens einen nach radial innen offenen Aussparung in der ersten Jochscheibe vorgesehene Kunststoffkörpermaterial miteinander verbunden bzw. einstückig ausgebildet sind.

Um den Radialabstand zwischen der aus einem magnetisch leitfähigen Material, insbesondere Weicheisen ausgebildeten Jochscheibe und dem Anker weiter zu minimieren, ist in Weiterbildung der Erfindung mit Vorteil vorgesehen, dass die erste Jochscheibe derart umspritzt ist, dass die erste Jochscheibe in den Umfangsabschnitten zwischen jeweils zwei von dem Kunststoffkörpermaterial radial innerhalb der nach innen offenen Aussparungen gebildeten Führungen unmittelbar einen Ankerführungsraum begrenzt, dass also am Innenumfang der Jochscheibe nicht vollumfänglich Kunststoffmaterial vorgesehen ist, sondern bevorzugt im Wesentlichen nur in den Bereichen radial innerhalb der Aussparungen, um somit den magnetischen Wirkungsgrad zu verbessern.

Bevorzugt ist der Überstand der mindestens einen Führung nach radial innen über die Jochscheibe aus einem Wertebereich zwischen 0,01 mm und 0,1 mm gewählt. Die erfindungsgemäße Fertigungstechnologie ermöglicht es, diesen Wert exakt durch eine entsprechende Ausformung des Spritzwerkzeugs einzustellen.

Wie bereits erwähnt ist es besonders zweckmäßig, wenn auf zusätzliche Führungselemente, wie eine Ankerführungshülse verzichtet wird und sich die mindestens eine Führung innerhalb der ersten Jochscheibe in axialer Richtung in den Ankerführungsraum fortsetzt, dass also in einem Bereich benachbart zur Jochscheibe im Ankerführungsraum mindestens eine nach radial innen vorstehende, vorzugsweise linienförmige bzw. strangförmige Führung ausgebildet ist, vorzugsweise mehrere gleichmäßig in Umfangsrichtung beabstandete Führungen, also insgesamt eine in Umfangsrichtung segmentierte Führung erhalten wird.

Wie eingangs erwähnt, ist der nach dem Konzept der Erfindung ausgebildete Spulenkörper geeignet und bestimmt, jedoch nicht ausschließlich, zum Einsatz für kleinbauende Anwendungen. Bevorzugt hat der Spulenkörper daher eine Axialerstreckung aus einem Wertebereich zwischen 5 mm und 35 mm, vorzugsweise zwischen 15 mm und 25 mm und/oder einen Innendurchmesser des Ankerführungsraums aus einem Wertebereich zwischen 5 mm und 20 mm, vorzugsweise zwischen 5 mm und 10 mm. Weiter bevorzugt beträgt der Außendurchmesser der ersten Jochscheibe zwischen 10 mm und 30 mm.

Im Hinblick auf die Ausbildung des Wickelabschnittes gibt es unterschiedliche Möglichkeiten. Bevorzugt ist dieser unmittelbar am Kunststoffkörper ausgebildet und weist noch weiter bevorzugt einen zylindrischen Abschnitt des Kunststoffkörpers auf, auf welchen die bestrombare Wicklung aufwickelbar, insbesondere aufgewickelt ist.

Die Erfindung führt auch auf eine elektromagnetische Stellvorrichtung mit einem eine bestrombare Wicklung tragenden Spulenkörper, welcher nach dem Konzept der Erfindung ausgebildet ist, in dessen Ankerführungsraum ein verstellbarer Anker aufgenommen ist, der an der mindestens einen Führung radial innerhalb des ersten Joches und vorzugsweise auch an mindestens einer von Kunststoffkörpermaterial ausgebildeten, vorzugsweise strangartigen Führung axial benachbart zum Joch im Ankerführungsraum geführt ist. Grundsätzlich gibt es verschiedenste Anwendungsmöglichkeiten für die elektromagnetische Stellvorrichtung. Bevorzugt ist diese Teil einer Ventilvorrichtung, insbesondere einer Ölventilvorrichtung, wobei es noch weiter bevorzugt ist, wenn ein den Kern durchsetzender, einstückig mit dem Anker ausgebildeter oder zumindest mit dem Anker zusammenwirkender Stößel mit einem Ventilkörper der Ventilvorrichtung verstellend zusammenwirkt, wobei es sich besonders bevorzugt um eine Ventilkugel handelt.

Bei Bedarf kann der Anker mittels der bestrombaren Wicklung entgegen der Kraft einer Rückstellfeder und/oder gegen die Druckkraft eines beispielsweise mit Fluiddruck beaufschlagten Ventilkörpers verstellbar sein oder die Rückverstellung erfolgt durch entsprechende Bestromung der Wicklung.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine Längsschnittansicht durch eine bevorzugte Ausführungsform eines erfindungsgemäßen Spulenträgers,
- Fig. 2a:: eine Querschnittsansicht durch ein erstes Jochelement des Spulenträgers gemäß Fig. 1,
- Fig. 2b:: eine Detailvergrößerung aus Fig. 2a, aus der ersichtlich ist, dass Kunststoffkörpermaterial nach radial innen offene Aussparungen im Jochelement nach radial innen überragt und eine Führungsfläche für einen axial verstellbaren Anker an dessen Mantelfläche ausbildet,
- Fig.3a:: eine Ansicht einer Ventilanordnung mit einer elektromagnetischen Stellvorrichtung, umfassend einen im Inneren eines Gehäuses angeordneten Spulenträger gemäß der Erfindung,
- Fig. 4:: eine Längsschnittansicht durch eine elektromagnetische Stellvorrichtung.

In den Figuren sind gleiche Elemente und Elemente mit der gleichen Funktion mit den gleichen Bezugszeichen gekennzeichnet.

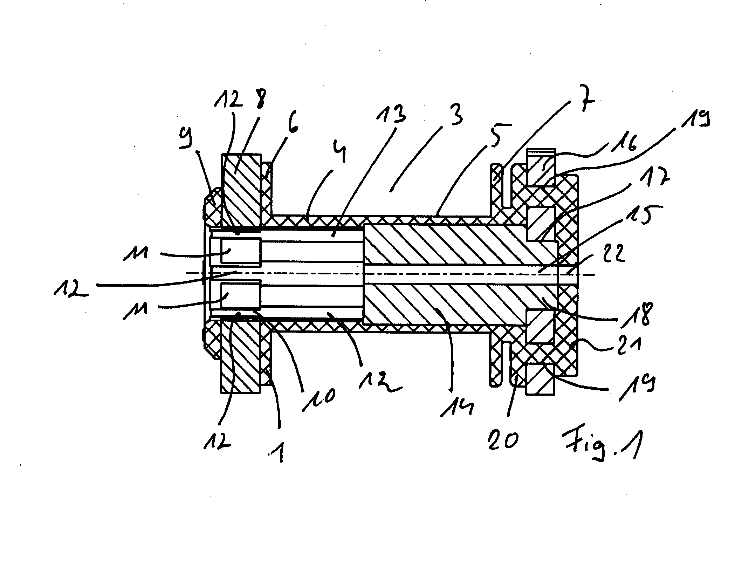

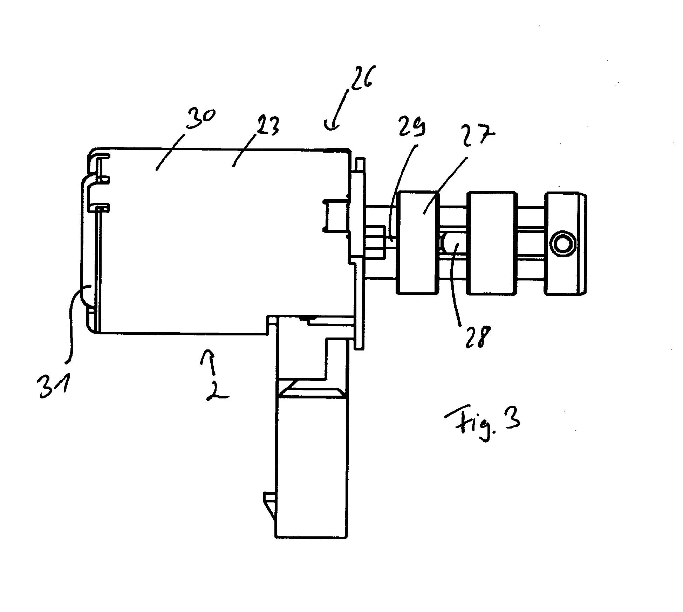

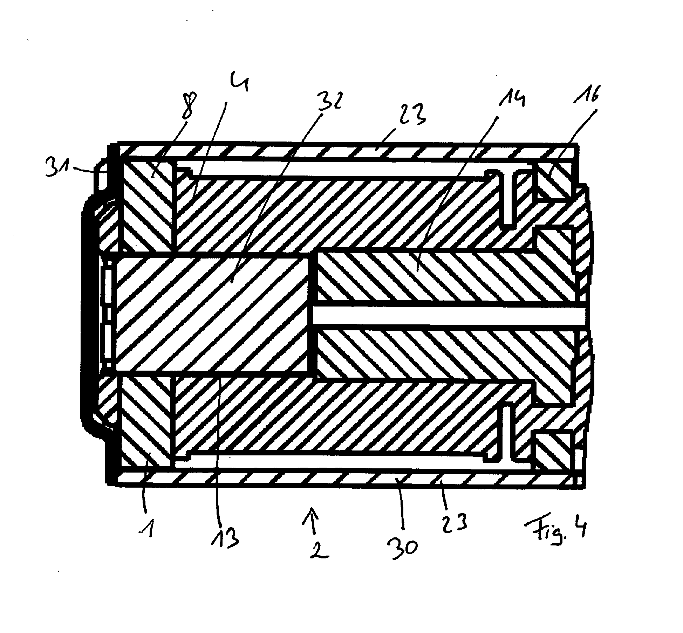

In Fig. 1 ist ein Spulenträger 1 für eine beispielhaft in den Fig. 3 und 4 gezeigte elektromagnetische Stellvorrichtung 2 gezeigt. Der Spulenträger umfasst einen Wickelabschnitt 3 zur Aufnahme einer nicht dargestellten bestrombaren Wicklung (Spule), wobei der Wickelabschnitt 3 in dem gezeigten Ausführungsbeispiel am Außenumfang eines spritzgegossenen Kunststoffkörpers 4 ausgebildet ist. Der Kunststoffkörper 4 weist zumindest im Bereich des Wickelabschnitts 3 eine zylindrische Mantelfläche 5 auf, auf welche die Wicklung wickelbar ist. In der Zeichnungsebene links wird der Wickelabschnitt 3 begrenzt von einem ringförmigen ersten Stützabschnitt 6, der sich in radialer Richtung über die vorgenannte Mantelfläche 5 erstreckt. Axial gegenüberliegend wird der Wickelabschnitt 3 begrenzt von einer radialen und sich in Umfangsrichtung erstreckenden Stützwand 7. Erster Stützabschnitt 6 und Stützwand 7 nehmen im gewickelten Zustand der Wicklung letztere axial zwischen sich auf.

Wie sich aus Fig. 1 ergibt, grenzt axial in der Zeichnungsebene links an den ersten Stützabschnitt 6 eine erste Jochscheibe 8 an, die von dem Kunststoffmaterial des Kunststoffkörpers 4 umspritzt ist, d.h. durch Umspritzen am Kunststoffkörper 4 festgelegt ist. Dabei ist die erste Jochscheibe 8 in dem gezeigten Ausführungsbeispiel axial aufgenommen zwischen dem ersten Stützabschnitt 6 und einem endseitigen zweiten Stützabschnitt 9, die zusammen eine nutförmige Aufnahme für die erste Jochscheibe 8 begrenzen. Die Jochscheibe 8 weist eine größere Dicken- und damit Axialerstreckung auf als der erste Stützabschnitt 6, wodurch der erste Stützabschnitt 6 verstärkt bzw. gestützt wird und ein Aufbiegen beim Wickelprozess sicher vermieden wird.

Aus Fig. 1 ergibt sich weiter, dass die erste Jochscheibe 8 als Ringscheibe ausgebildet ist und eine zentrische Durchgangsöffnung 10 begrenzt. Die erste Jochscheibe 8 ragt nach radial innen in in Umfangsrichtung beabstandeten Abschnitten 11 bis zur Durchgangsöffnung 10 und begrenzt diese somit unmittelbar.

In Bereichen in Umfangsrichtung zwischen diesen Abschnitten 11 ist Kunststoffkörpermaterial vorgesehen, welches später noch zu erläuternde, nach radial innen offene Aussparungen in der ersten Jochscheibe 8 nach innen durchdringt und somit die Durchgangsöffnung 10 in Umfangsrichtung zwischen den Abschnitten 11 begrenzt und jeweils eine Führung 12 für einen in einem Ankerführungsraum 13 innerhalb des Kunststoffkörpers 4 verstellbaren Anker bildet. Die vorgenannten Führungen 12 setzen sich axial benachbart zu dem Bereich innerhalb der ersten Jochscheibe 8 in dem Ankerführungsraum 13 strangartig fort. Insgesamt handelt es sich bei den Führungen 12 um geradlinige Erhöhungen, die insgesamt eine in Umfangsrichtung segmentierte Führung für den Anker ergeben, d.h. in Umfangsrichtung zwischen jeweils zwei Führungen ist eine nutartige Vertiefung vorgesehen.

Wie sich aus Fig. 1 weiter ergibt, wird der Ankerführungsraum 13 axial begrenzt von einem Kern 14, der eine Durchgangsbohrung 15 zur Aufnahme eines nicht dargestellten Stößels aufweist. Axial an den Kern 14 liegt an der von der ersten Jochscheibe 8 abgewandten Axialseite des Kerns 14 eine zweite Jochscheibe 16 an, die die gleiche Radialerstreckung aufweist wie die erste Jochscheibe. Auch die zweite Jochscheibe 14 weist eine zentrische Öffnung 17 auf, die von einem Fortsatzabschnitt 18 des Kerns 14 durchsetzt ist. Mit Radialabstand zu der Öffnung 17 sind in der zweiten Jochscheibe 16 mehrere in Umfangsrichtung beabstandete umfangsgeschlossene Durchgänge 19 ausgebildet, die von Kunststoffkörpermaterial beim Spritzvorgang durchdrungen sind. Das Kunststoffkörpermaterial in den Durchgangsöffnungen 19 verbindet einstückig einen ersten Stützscheibenabschnitt 20 auf der der ersten Jochscheibe 8 zugewandten Seite der zweiten Jochscheibe 16 mit einer zweiten Stützscheibe 21 auf der der von der ersten Jochscheibe 8 abgewandten Axialseite der zweiten Jochscheibe 16. Zu erkennen ist ferner in Fig. 1 eine Öffnung 22 zentrisch in der zweiten Stützscheibe 21, die mit der Durchgangsbohrung 15 für den Stößel im Kern 14 fluchtet. Aus Fig. 1 ergibt sich insgesamt, dass die zweite Jochscheibe 16 axial gesichert ist von den beiden Stützscheibenabschnitten 20, 21 des Kunststoffkörpers 4.

Im montierten Zustand sind die beiden Jochscheiben 8, 16 magnetisch leitend verbunden über ein, vorzugsweise metallisches Gehäuse 23, welches in den Fig. 3 und 4 dargestellt ist.

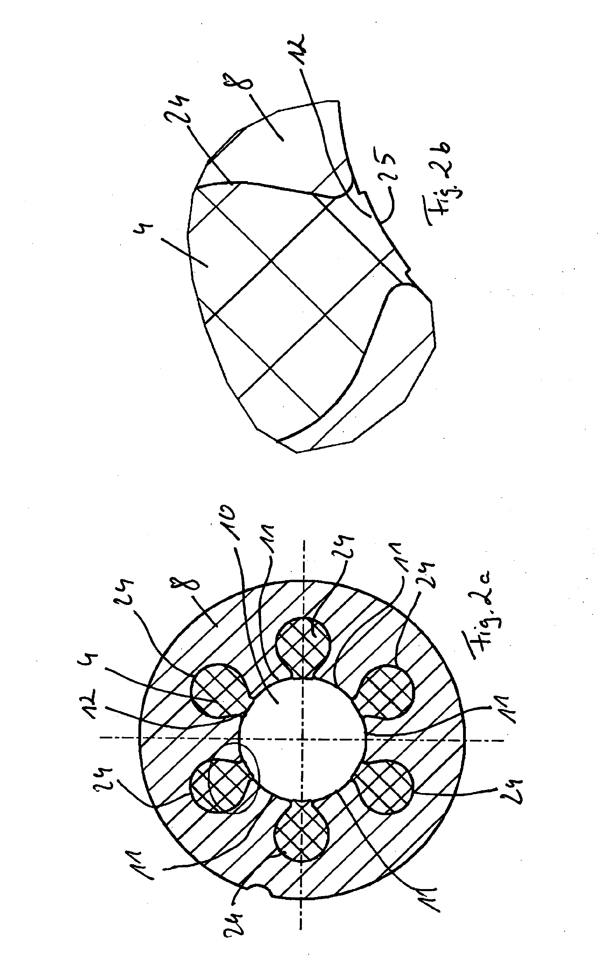

In Fig. 2a ist die umspritzte erste Jochscheibe 8 gemäß Fig. 1 in einer Querschnittsansicht gezeigt. Zu erkennen sind mehrere mit Radialabstand zum Außenumfang angeordnete Aussparungen 24 (Durchgangsöffnungen), die nach radial innen, d.h. hin zur Durchgangsöffnung 10 offen sind. Die Aussparungen 24 sind gleichmäßig in Umfangsrichtung beabstandet und weisen in einem radial äußeren Bereich eine kreisförmige Kontur auf, die sich nach radial innen hin verjüngt. Insgesamt wird somit im Querschnitt eine Art Tropfenform erhalten. Die nach radial innen offenen Aussparungen 24 sind gefüllt mit Kunststoffkörpermaterial, welches nach radial innen über die erste Jochscheibe 8 vorsteht und am Innenumfang der Durchgangsöffnung 10 jeweils eine Führung 12 mit einer konkav gewölbten Führungsfläche 25 für den Anker ausbildet. Das Kunststoffkörpermaterial in den Aussparungen 4 verbindet einstückig miteinander die beiden Stützabschnitte 6, 9 auf beiden Axialseiten der ersten Jochscheibe 8.

Aus Fig. 2b ergibt sich, dass in Bereichen in Umfangsrichtung zwischen zwei Führungen 12 unmittelbar die erste Jochscheibe 8 die Durchgangsöffnung 10 begrenzt, und zwar in den mit den Bezugszeichen 11 gekennzeichneten Abschnitten.

Aus Fig. 3 ist zu erkennen, dass bei einer Ventilanordnung 26, umfassend eine elektromagnetische Stellvorrichtung an das Metallgehäuse 23 ein Umfangsnuten aufweisender Führungsabschnitt 27 aus Kunststoff anschließt, in dem ein, hier kugelförmiges Ventilelement 28 aufgenommen ist, welches mittels eines mit dem nicht dargestellten Anker zusammenwirkenden Stößel 29 zwischen unterschiedlichen Schaltstellungen verstellbar ist. Bevorzugt handelt es sich bei der Ventilanordnung um eine 3/2-Wegeventilanordnung.

Aus Fig. 3 ergibt sich insbesondere, dass mit einem den Spulenträger umfangsseitig umschließenden Hülsenabschnitt 30 des metallischen Gehäuses ein axialer Deckel verbunden ist, insbesondere durch Umbiegen entsprechender Verbindungslaschen. Der Deckel 31 kann unmittelbar oder mittelbar (im Falle des zusätzlichen Vorsehens eines Bauteils axial benachbart zum Deckel 31) einen Anschlag für den Anker im Ankerführungsraum bilden. Der Hülsenabschnitt 30 dient zum Schließen des magnetischen Kreises zwischen den beiden, beispielsweise in Fig. 1 gezeigten Jochscheiben.

In Fig. 4 ist ein Ausschnitt der elektromagnetischen Stellvorrichtung 2 gemäß Fig. 3 gezeigt. Aus zeichnerischen Gründen sind Kern 14 und zweite Jochscheibe 16 als ein einziges Bauteil ausgebildet, was theoretisch auch realisierbar ist. Ebenso ist lediglich aus zeichnerischen Gründen die eigentliche elektromagnetische Wicklung nicht unabhängig von dem Kunststoffkörper 4 dargestellt.

Zu erkennen ist, dass in dem Ankerführungsraum 13 ein bolzen- bzw. zylinderförmiger Anker 32 verstellbar angeordnet ist, der durch Bestromen der nicht separat dargestellten Wicklung bewegt werden kann. Aus Übersichtlichkeitsgründen ist der Stößel, der mittels des Ankers 32 betätigbar ist oder der einstückig mit dem Anker 32 ausgebildet sein kann nicht dargestellt.

Aus Fig. 4 ergibt sich insbesondere dass sich der Hülsenabschnitt 30 des metallischen Gehäuses 23 zwischen den beiden Jochscheiben 8, 16 erstreckt und diese so magnetisch leitend miteinander verbindet. Der Deckel 31 stützt sich in einem radial äußeren Bereich an der ersten Jochscheibe 8, was aber aus Fixierungsgründen nicht notwendig ist, da die erste Jochscheibe 8 unmittelbar durch Umspritzen fixiert bzw. gehalten ist.

### Bezugszeichenliste

- 1: Spulenträger
- 2: elektromagnetische Stellvorrichtung
- 3: Wickelabschnitt
- 4: Kunststoffkörper
- 5: Mantelfläche des Wicklungsabschnittes
- 6: erster Stützabschnitt
- 7: Stützwand
- 8: erste Jochscheibe
- 9: zweiter Stützabschnitt
- 10: Durchgangsöffnung
- 11: Abschnitt
- 12: Führung
- 13: Ankerraum
- 14: Kern
- 15: Durchgangsbohrung
- 16: zweite Jochscheibe
- 17: Öffnung
- 18: Fortsatzabschnitt
- 19: Durchgänge
- 20: erster Stützscheibenabschnitt
- 21: zweiter Stützscheibenabschnitt
- 22: Öffnung
- 23: metallisches Gehäuse
- 24: Aussparung
- 25: Führungsfläche
- 26: Ventilanordnung
- 27: Führungsabschnitt
- 28: Ventilelement
- 29: Stößel
- 30: Hülsenabschnitt
- 31: Deckel
- 32: Anker

## Patentansprüche

1. Spulenträger (1) für eine elektromagnetische Stellvorrichtung (2) mit einem Wickelabschnitt (3) für eine bestrombare Wicklung, mit einem spritzgegossenen Kunststoffkörper (4) mit einer auf einer ersten Axialseite des Wickelabschnittes (3) festgelegten, als Ringscheibe ausgebildeten eine zentrische Durchgangsöffnung (10) aufweisende ersten Jochscheibe (8) und mit einem von dem Kunststoffkörper (4) umschlossenen Ankerführungsraum (13) zur Aufnahme eines axial verstellbaren Ankers (32), wobei auf einer der ersten Axialseite gegenüberliegenden Axialseite des Wickelabschnitts (3) eine zweite Jochscheibe (16) vorgesehen ist,
wobei
die erste Jochscheibe (8) mindestens eine nach radial innen, zu der Durchgangsöffnung (10) hin offene Aussparung (24) aufweist und dass die erste Jochscheibe (8) derart durch Umspritzen am Kunststoffkörper (4) festgelegt ist, dass Kunststoffkörpermaterial die mindestens eine Aussparung (24) füllt und nach radial innen über die Aussparung (24) in die zentrische Durchgangsöffnung (10) vorsteht und eine Führung (12) für den Anker (32) ausbildet, und dass die zweite Jochscheibe (16) an dem Kunststoffkörper (4) durch Umspritzen festgelegt ist.

2. Spulenträger nach Anspruch 1,
**dadurch gekennzeichnet,**
**dass** mehrere, insbesondere gleichmäßig, in Umfangsrichtung beabstandete Aussparungen (24) in der ersten Jochscheibe (8) vorgesehen sind, und dass das Kunststoffkörpermaterial die Aussparungen (24) jeweils nach radial innen überragt und jeweils eine Führung (12) für den Anker (32) ausbildet.

3. Spulenträger nach einem der Ansprüche 1 oder 2,
**dadurch gekennzeichnet,**
**dass** der Innenumfang der ersten Jochscheibe (8) auf beiden Axialseiten der ersten Jochscheibe (8) nach radial außen überragt ist von einem axialen, vorzugsweise umfangsgeschlossenen, Stützabschnitt des Spulenkörpers und dass die beiden Stützabschnitte (6, 9) materialschlüssig über das Kunststoffkörpermaterial in der mindestens einen Aussparung (24) in der ersten Jochscheibe (8) mit einander verbunden sind.

4. Spulenträger nach Anspruch 3,
**dadurch gekennzeichnet,**
**dass** in Umfangsrichtung zwischen mindestens zwei der Führungen (12) die erste Jochscheibe (8) den Innenumfang des Ankerführungsraums begrenzt.

5. Spulenträger nach einem der vorhergehenden Ansprüche,
**dadurch gekennzeichnet,**
**dass** die mindestens eine Führung (12) die erste Jochscheibe (8) um eine Strecke aus einem Wertebereich zwischen 0,01 mm und 0,1 mm nach radial innen überragt.

6. Spulenträger nach einem der vorhergehenden Ansprüche,
**dadurch gekennzeichnet,**
**dass** sich die mindestens eine Führung (12) axial die Innenumfangswand des Ankerführungsraums fortsetzt.

7. Spulenträger nach einem der vorhergehenden Ansprüche,
**dadurch gekennzeichnet,**
**dass** die mindestens eine Führung (12) eine konkav gewölbte, insbesondere zylindrische, Führungsfläche zur gleitenden Anlage des Ankers (32) aufweist.

8. Spulenträger nach einem der vorhergehenden Ansprüche,
**dadurch gekennzeichnet,**
**dass** die erste und/oder die zweite Jochscheibe (8, 16) einteilig ausgebildet sind/ist.

9. Spulenträger nach einem der vorhergehenden Ansprüche,
**dadurch gekennzeichnet,**
**dass** von dem Kunststoffkörper (4) ein den Ankerführungsraum axial begrenzender, vorzugsweise an der zweiten Jochscheibe (16) anliegender und/oder diese axial durchsetzender Kern (14), umspritzt ist.

10. Spulenträger nach Anspruch 9,
**dadurch gekennzeichnet,**
**dass** der Kern (14) einen axialen Durchgangskanal zur Aufnahme eines mittels des Ankers (32) verstellbaren Stößels (29) aufweist.

11. Spulenträger nach einem der vorhergehenden Ansprüche,
**dadurch gekennzeichnet,**
**dass** der Spulenträger (1) eine Axialerstreckung aus einem Wertebereich zwischen 5 und 35 mm, vorzugsweise zwischen 15 und 25 mm und/oder einen Innendurchmesser des Ankerführungsraums aus einem Wertebereich zwischen 5 mm und 20 mm, vorzugsweise zwischen 5 mm und 10 mm aufweist.

12. Spulenträger nach einem der vorhergehenden Ansprüche,
**dadurch gekennzeichnet,**
**dass** um den Wickelabschnitt (3) eine bestrombare Wicklung gewickelt ist.

13. Elektromagnetische Stellvorrichtung mit einem eine bestrombare Wicklung tragenden Spulenträger (1) nach einem der vorhergehenden Ansprüche, in dessen Ankerführungsraum ein verstellbarer Anker (32) aufgenommen ist, der an der mindestens einen Führung (12) geführt ist.

## Claims

1. A coil carrier (1) for an electromagnetic actuator (2), with a winding section (3) for an energisable winding, with an injection moulded plastic body (4), with a first yoke disc (8) designed as an annular disc, having a central passage opening (10), and affixed on a first axial face of the winding section (3), and with an armature guide chamber (13) enclosed by the plastic body (4) for the accommodation of an axially adjustable armature (32), wherein a second yoke disc (16) is provided on an axial face of the winding section (3) that is located opposite to the first axial face, wherein the first yoke disk (8) has at least one recess (24) that is open in the radially inwards direction towards the passage opening (10), and in that, the first yoke disk (8) is affixed to the plastic body (4) by means of overmoulding, such that plastic body material fills the at least one recess (24) and projects radially inwards beyond the recess (24) into the central passage opening (10) and forms a guide (12) for the armature (32), and in that, the second yoke disk (16) is affixed to the plastic body (4) by means of overmoulding.

2. The coil carrier in accordance with claim 1, **characterised in that**, a plurality of recesses (24), spaced apart in the peripheral direction, in particular evenly, are provided in the first yoke disk (8), and **in that**, in each case the plastic body material projects beyond the recesses (24) in the radially inwards direction, and in each case forms a guide (12) for the armature (32).

3. The coil carrier in accordance with one of the claims 1 or 2, **characterised in that**, an axial, preferably peripherally closed supporting section of the coil body projects radially outwards beyond the inner periphery of the first yoke disk (8) on both axial sides of the first yoke disk (8), and **in that**, the two supporting sections (6, 9) are materially bonded with one another via the plastic body material in the at least one recess (24) in the first yoke disc (8).

4. The coil carrier in accordance with claim 3, **characterised in that**, the first yoke disc (8) bounds the inner periphery of the armature guide chamber between at least two of the guides (12) in the peripheral direction.

5. The coil carrier in accordance with one of the preceding claims, **characterised in that**, the at least one guide (12) projects radially inwards beyond the first yoke disc (8) by a distance from a range of values between 0.01 mm and 0.1 mm.

6. The coil carrier in accordance with one of the preceding claims, **characterised in that**, the at least one guide (12) axially continues the inner periphery wall of the armature guide chamber.

7. The coil carrier in accordance with one of the preceding claims, **characterised in that**, the at least one guide (12) has a concave curved, in particular a cylindrical, guiding surface to provide the sliding facility for the armature (32).

8. The coil carrier in accordance with one of the preceding claims, **characterised in that**, the first and/or the second yoke disc (8, 16) are/is designed in one piece.

9. The coil carrier in accordance with one of the preceding claims, **characterised in that**, a core (14), axially bounding the armature guide chamber, preferably adjacent to the second yoke disc (16) and/or axially passing through the latter, is overmoulded by the plastic body (4).

10. The coil carrier in accordance with Claim 9, **characterised in that**, the core (14) has an axial passage for purposes of accommodating a plunger (29) adjustable by means of the armature (32).

11. The coil carrier in accordance with one of the preceding claims, **characterised in that**, the coil carrier (1) has an axial extent from a range of values between 5 mm and 35 mm, preferably between 15 mm and 25 mm, and/or an internal diameter of the armature guide chamber from a range of values between 5 mm and 20 mm, preferably between 5 mm and 10 mm.

12. The coil carrier in accordance with one of the preceding claims, **characterised in that**, an energisable winding is wound about the winding section (3).

13. An electromagnetic actuator with a coil carrier (1) carrying an energisable winding in accordance with one of the preceding claims, in whose armature guide chamber is accommodated an adjustable armature (32), which is guided on the at least one guide (12).

## Revendications

1. Porte-bobine (1) pour un mécanisme de réglage électromagnétique (2) comprenant une portion d'enroulement (3) pour un enroulement pouvant être alimenté électriquement, comprenant un corps en matière plastique (4) moulé par injection, comprenant un premier disque de culasse (8) fixé sur un premier côté axial de la portion d'enroulement (3), réalisé sous la forme d'un disque annulaire et possédant une ouverture de passage (10) centrée, et comprenant un espace de guidage d'induit (13) entouré par le corps en matière plastique (4) destiné à accueillir un induit (32) positionnable dans le sens axial, un deuxième disque de culasse (16) se trouvant sur un côté axial de la portion d'enroulement (3) à l'opposé du premier côté axial, le premier disque de culasse (8) possédant, en direction de l'ouverture de passage (10), au moins une cavité (24) radiale intérieure ouverte, et le premier disque de culasse (8) étant fixé au corps en matière plastique (4) par surmoulage de telle sorte que le matériau du corps en matière plastique remplit ladite au moins une cavité (24) et fait saillie dans le sens radial vers l'intérieur au-dessus de la cavité (24) dans l'ouverture de passage (10) centrée et forme un guide (12) pour l'induit (32), et le deuxième disque de culasse (16) étant fixé au corps en matière plastique (4) par surmoulage.

2. Porte-bobine selon la revendication 1, **caractérisé en ce que** plusieurs cavités (24) espacées, notamment de manière homogène, dans le sens circonférentiel sont réalisées sur le premier disque de culasse (8), et **en ce que** le matériau du corps en matière plastique fait saillie des cavités (24) respectivement dans le sens radial vers l'intérieur et forme respectivement un guide (12) pour l'induit (32).

3. Porte-bobine selon l'une des revendications 1 et 2, **caractérisé en ce que** le pourtour intérieur du premier disque de culasse (8) est surplombé dans le sens radial vers l'extérieur sur les deux côtés axiaux du disque de culasse (8) par une portion support axiale du corps de bobine, de préférence au pourtour fermé, et **en ce que** les deux portions support (6, 9) sont reliées ensemble par liaison de matière par le biais du matériau du corps en matière plastique dans l'au moins une cavité (24) dans le premier disque de culasse (8).

4. Porte-bobine selon la revendication 3, **caractérisé en ce que** dans le sens du pourtour entre au moins deux des guides (12), le premier disque de culasse (8) délimite le pourtour intérieur de l'espace de guidage d'induit.

5. Porte-bobine selon l'une des revendications précédentes, **caractérisé en ce que** l'au moins un guide (12) surplombe le premier disque de culasse (8) dans le sens radial vers l'intérieur sur un segment dans une plage de valeurs entre 0,01 mm et 0,1 mm.

6. Porte-bobine selon l'une des revendications précédentes, **caractérisé en ce que** l'au moins un guide (12) poursuit dans le sens axial la paroi circonférentielle intérieure de l'espace de guidage d'induit.

7. Porte-bobine selon l'une des revendications précédentes, **caractérisé en ce que** l'au moins un guide (12) possède une surface de guidage bombée concave, notamment cylindrique, destinée à un appui glissant de l'induit (32).

8. Porte-bobine selon l'une des revendications précédentes, **caractérisé en ce que** le premier et/ou le deuxième disque de culasse (8, 16) est/sont formé(s) d'une seule pièce.

9. Porte-bobine selon l'une des revendications précédentes, **caractérisé en ce qu'**un noyau (14) qui délimite l'espace de guidage d'induit dans le sens axial et qui repose de préférence sur le deuxième disque de culasse (16) et/ou le traverse dans le sens axial, est surmoulé par le corps en matière plastique (4).

10. Porte-bobine selon la revendication 9, **caractérisé en ce que** le noyau (14) possède un canal de passage axial destiné à accueillir un coulisseau (29) positionnable par l'intermédiaire de l'induit (32).

11. Porte-bobine selon l'une des revendications précédentes, **caractérisé en ce que** le porte-bobine (1) présente une projection axiale dans une plage de valeurs entre 5 et 35 mm, de préférence entre 15 et 25 mm et/ou un diamètre intérieur de l'espace de guidage d'induit dans une plage de valeurs entre 5 mm et 20 mm, de préférence entre 5 mm et 10 mm.

12. Porte-bobine selon l'une des revendications précédentes, **caractérisé en ce qu'**un enroulement pouvant être alimenté électriquement est enroulé autour de la portion d'enroulement (3).

13. Mécanisme de réglage électromagnétique comprenant un porte-bobine (1) selon l'une des revendications précédentes portant un enroulement pouvant être alimenté électriquement, dans l'espace de guidage d'induit duquel est accueilli un induit (32) positionnable qui est guidé sur l'au moins un guide (12) .
